# EUROPEAN PATENT APPLICATION

(11) **EP 4 032 394 A1**
(43) Date of publication of application: **27.07.2022**
(21) Application number: 22152814.4
(22) Date of filing: 21.01.2022
(51) Int. Cl.: A01G 3/00, A01G 5/00, B26D 1/40, B26D 7/06, B26D 7/26

(54) **CUTTING DEVICE FOR CUTTING LEAVES FROM FLOWERS OF PLANTS**

(30) Priority: 22.01.2021 NL 2027374; 19.02.2021 NL 2027594; 17.09.2021 NL 2029197
(71) Applicant: Van Esch, Patrick Michael Antonius, 17249 Castell-Platja d'Aro Girona (ES)
(72) Inventor: Van Esch, Patrick Michael Antonius, 17249 Castell-Platja d'Aro Girona (ES)
(74) Representative: Verhees, Godefridus Josephus Maria

(57) **Abstract**

A cutting device 1 for cutting leaves from flowers of plants has a rotating drum 7 into which the flowers to be treated can be placed. The drum 7 has two spaced rings 9 and 11 between which a number of elongate wall elements 13 extend. During operation, the leaves to be cut protrude through the openings 17 between the wall elements and are cut off there by revolving knives 21. Tensioning means 29 are integrated in the drum 7 for keeping the wall elements 13 taut. The tensioning means 29 have an elongated tensioning element 31 that at one end is connected to one of the rings 9 and at the other end is connected to the other ring 11. The tensioning means 29 can move the rings away from each other and thereby bring the wall elements 13 under tension.

## Description

### Technical field of the invention

The invention relates to a cutting device for cutting leaves from flowers of plants, comprising:
- a drum into which the flowers to be treated are to be inserted, which drum comprises two rings located at a distance from each other, one at each end of the drum, as well as a plurality of elongate wall elements, each of which is fixed with one end to one of the rings and with the other end to the other ring and extends parallel to the longitudinal axis of the drum between the rings, which wall elements are distributed over the circumference of the drum and are spaced apart, wherein during operation the leaves to be cut protrude through the openings between the wall elements,
- first rotation means for rotating the drum about the longitudinal axis,
- at least one elongate knife provided with a cutting edge, which knife is next to the drum, and
- tensioning means for keeping the wall elements taut between the two rings, which tensioning means are connected to the two rings and exert an axial force on each of the rings, which forces are directed away from each other.

Such a cutting device preferably has several knifes which are helical and rotatable about a common axis of rotation.

### Background of the invention

From US 10,602,679 B2 a drum unit is known for use in a cutting device provided with rotation means. This known drum unit has a housing in which the drum is mounted. The two rings at the ends of the drum are rotatably in the housing by means of bearings. These bearings are fixed in the housing and the tensioning means are configured such that they can displace one of the rings relative to the respective bearing in which the ring is arranged. By moving this ring away from the other ring, the wall elements in between are put under tension, so that the drum retains its cylindrical shape. The wall elements of the drum of this known cutting device are formed by cables or thin flexible rods. As a result, the wall of the drum is slack in itself and becomes stiff by tensioning the wall elements by pushing the rings away from each other. In the known drum unit the tensioning means are formed by the bearings whose mutual distance is fixed and by adjusting means which can displace one of the rings in axial direction relative to one of the bearings thereby increasing the distance between both rings. To clean the drum, the drum unit has to be removed from the cutting device and then cleaned. Due to its presence in the housing, the drum is relatively difficult to clean. In order to properly clean the drum, it must be removed from the housing and the rings must be removed from the bearings. This is quite laborious.

### Summary of the invention

It is an object of the invention to provide a cutting device of the type described in the preamble, wherein the drum can be cleaned more easily. To this end, the cutting device according to the invention is characterized in that the tensioning means are fully integrated in the drum. By fully integrating the tensioning means in the drum, the drum is rigid in itself and the cutting device need not be provided with means for tensioning the wall elements. Therefore, the drum does not have to be present in a drum unit in which the wall elements are kept under tension. The drum also retains its rigidity after it has been removed separately from the cutting device and can therefore be easily and properly cleaned.

An embodiment of the cutting-off device according to the invention is characterized in that the tensioning means comprise at least one elongate tensioning element which extends in the longitudinal direction of the drum and is connected with one end to one of the rings and with the other end to the other ring, the tension element being configured to exert a force on the two rings which pushes the two rings apart or which can displace the two rings away from each other.

In one embodiment, the tension element extends in the center of the drum and is connected to the rings near the ends via connecting structures, one of the ends being movable relative to the relevant connecting structure. By applying one centrally placed tensioning element, the force exerted on the rings is distributed evenly over the rings, so that the same tensioning force acts on all wall elements.

In another embodiment, the cutting device has at least three tensioning elements which are distributed over the circumference of the rings and which project between the rings and between or next to the wall elements. The advantage of this is that there is nothing present inside the drum that could complicate the introduction of plants to be processed into the drum.

Furthermore, the tensioning means preferably have at least one adjusting element, wherein the tensioning element or each tensioning element is attached with a first end to one of the rings or one of the connecting structures and with the other, second end is coupled via the adjusting element to the other ring or the other connection construction, wherein the rings can be moved away from or towards each other by means of the adjusting element.

The tensioning element, at the second end, is preferably provided with screw thread which cooperates with further screw threads of the adjusting element which is rotatably connected to the other connecting construction, whereby the tensioning element and the adjusting element are displaced relative to each other in longitudinal direction by rotation of the adjusting element.

In order to be able to remove the drum from the cutting device simply and quickly, an embodiment of the cutting device is characterized in that at the outside of at least one of the rings a toothing is provided in the ring, which toothing comprises a number of teeth arranged one behind the other in the circumferential direction of the ring, wherein the space between two successive teeth is bounded in the axial direction of the drum by limiting parts of the ring, and that the rotation means comprise at least one gear which is engaged with the teeth in the ring, wherein the meshing teeth of the gear are axially confined between the limiting parts of the space between the teeth of the gear in which the meshing teeth are located. The limiting parts of the ring, which are pressed against the meshing teeth of the gear wheel upon axial displacement of the drum, prevent the drum from sliding in axial direction. In the cutting device according to the invention the drum need not be enclosed in bearings. The cutting device according to the invention preferably has no bearings in which the drum is mounted, so that the drum does not have to be removed from the bearings for cleaning.

In order to prevent or reduce wear of the gear wheel, preferably, at the outside of at least one of the rings a circumferential groove is provided in the ring, the space in the groove is bounded in the axial direction of the drum by boundary walls of the ring, and that the cutting device comprises at least one roller which is partly present in the groove and is axially confined between the boundary walls of the groove. By using this groove it is not even necessary for the teeth to counteract axial displacement of the drum. As a result, it is not necessary to arrange the teeth in the ring and, for example, the teeth can also be present on the ring instead of in it. The teeth could even be completely omitted and the drive could take place by means of a belt or friction wheels.

The wall elements are preferably formed by wires (cables) or rods with a diameter between 0.5 and 2 mm so that the leaves of the tops of the cannabis plants can protrude more outside the drum.

In an embodiment of a cutting device in which the wall elements are formed by rods, the rods at one end over part of their length are preferably provided with external screw threads and being in holes in one of the rings, which holes are provided with internal screw threads, and that the rods at the other end are preferably provided with a radially projecting head and pass through holes in the other ring, wherein the radially protruding head does not fit into the holes and hooks behind the boundary edges of the holes. In this case, the head can be present at least partly recessed in a widened end of the holes. In this embodiment, as rods can be used spokes of bicycle wheels which are readily and relatively cheaply available, so that the costs for manufacturing the cutting device can be substantially reduced.

A further embodiment of the cutting device according to the invention is characterized in that the cutting device further comprises second rotation means for rotating the knife about an axis of rotation spaced from the cutting edge and parallel to and spaced from the longitudinal axis of the drum, wherein during operation the cutting edge of the knife rotates along the outside of the drum. A rotating knife cuts the leaves better than a stationary knife.

Yet another embodiment of the cutting device according to the invention is characterized in that the cutting device comprises adjusting means which can adjust the distance between the rotational axis of the knife and the longitudinal axis of the drum. Due to this adjusting option, the effectiveness of the cutting device can be optimized, so that more buds of cannabis plants can be processed per unit of time. The adjusting means are designed such that said distance can be varied by 1 cm. As a result, more or less leaves can be cut off the flowers as desired.

It is noted that the adjusting means for adjusting the distance between the rotational axis of the knife and the longitudinal axis of the drum can also be used advantageously with a cutting device without tensioning means or with a drum having a different construction (not with wires or rods as drum wall) .

Preferably the knife, at each end, is attached to a disc, wherein the cutting edge of the knife being at the periphery of the discs, which are journalled in slides, and wherein the adjusting means comprising adjusting screws which can move the slides in a direction radial to the drum.

### Brief description of the drawings

The invention will be further elucidated below on the basis of drawings in which embodiments of the cutting device according to the invention are shown, wherein:
Figure 1 shows a first embodiment of the cutting device in side view on the rotation means for the knives;
Figure 2 shows the cutting device shown in Figure 1 in side view as seen on the rotation means for the drum;
Figure 3 shows the cutting device shown in Figure 1 in longitudinal section along line III-III in Figure 1;
Figure 4 shows the drum of the cutting device shown in Figure 1 with the knives in perspective;
Figure 5 shows the drum shown in Figure 4 separately in perspective;
Figure 6 is a perspective view of a drum of a second embodiment of the cutting device according to the invention;
Figure 7 shows the drum shown in Figure 6 in longitudinal section;
Figure 8 shows a perspective view of a drum of a third embodiment of the cutting device according to the invention;
Figure 9 is a side view of the drum shown in Figure 8;
Figure 10 is a cross-sectional view of the drum shown in Figure 9 along line E-E;
Figure 11 shows a detail of the cross-section of the drum shown in Figure 10;
Figure 12 shows the drum shown in Figure 8 in longitudinal section;
Figure 13 is detail A of the longitudinal section of the drum shown in Figure 12;
Figure 14 is detail B of the longitudinal section of the drum shown in Figure 12;
Figure 15 shows a wall element of the drum shown in Figure 8;
Figure 16 shows the drum shown in Figure 7 in association with rollers and gears;
Figure 17 is a sectional view of the drum and rollers taken along line A-A in Figure 16; and
Figure 18 is a cross-section of the drum and gears along line B-B in Figure 16.

### Detailed description of the drawings

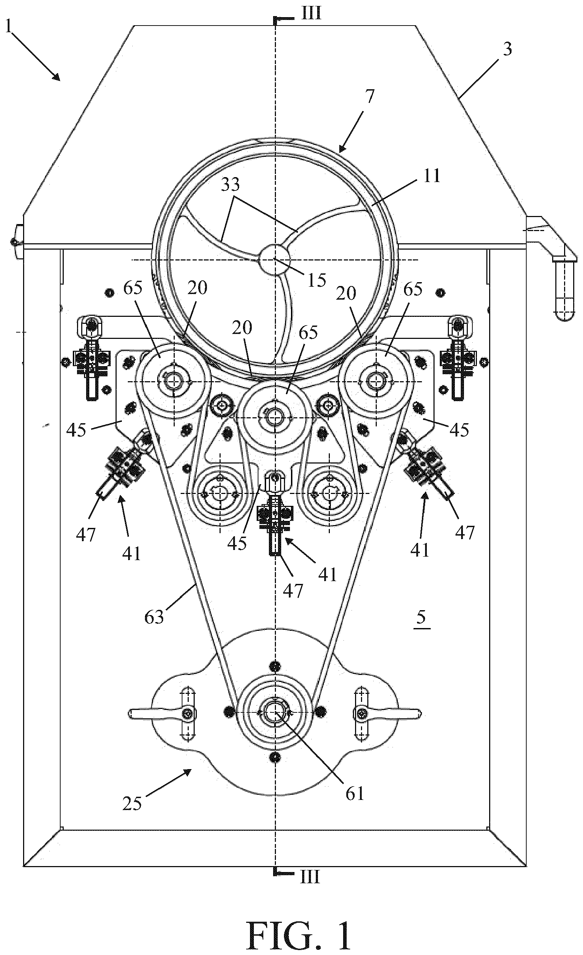

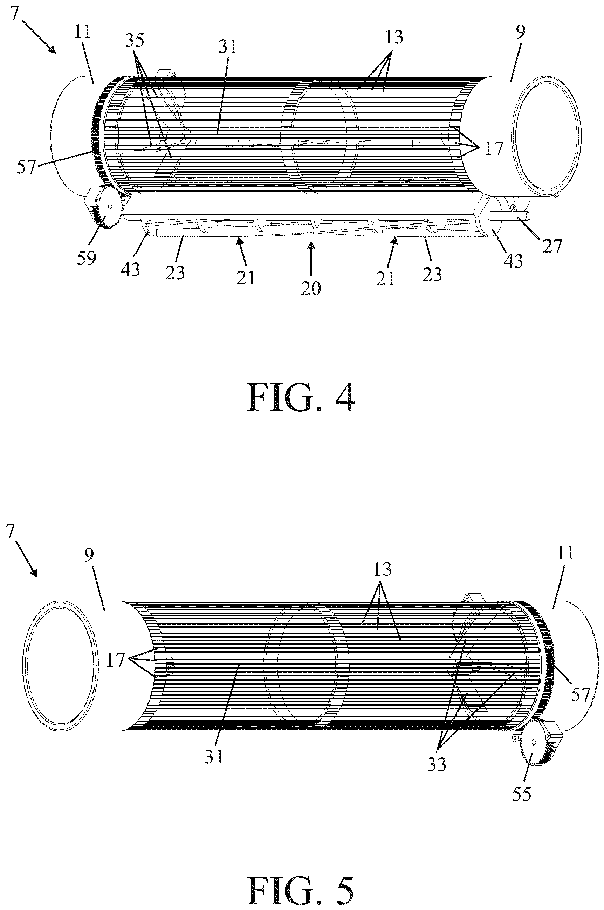

Figures 1-3 show a first embodiment of the cutting device according to the invention for cutting leaves between the flowers of the tops of cannabis plants. The cutting device 1 has a box 3 in which a frame 5 is arranged. In the frame 5 there is a rotatable drum 7 into which the tops of cannabis plants to be treated, have to be inserted. The drum 7 has two spaced rings 9 and 11, one at each end of the drum 7. These rings are formed by short tube lengths. The drum 7 furthermore has a number of elongate wall elements 13, which are attached with their ends to the rings 9 and 11 and extend parallel to the longitudinal axis 15 of the drum 7 between the rings 9 and 11 . The wall elements 13 are distributed over the circumference of the drum 7 and are spaced apart from each other. During operation, the leaves to be cut protrude through the openings 17 present between the wall elements. The wall elements 13 are formed by bars with a round cross section with a diameter of 1 or 1.5 mm. In figures 4 and 5 the drum 7 is shown separately and the wall elements 13 are clearly visible.

The cutting device 1 furthermore has three knife cages 20, each with three spiral knives 21, see also figure 4, in which one of the knife cages is clearly visible. The knives are provided with cutting edges 23 which are present on the periphery of the knife cages. The knife cages 20 are present next to the drum 7 and are rotatable about rotational axes 27, wherein the cutting edges 23 of the knives 21 being spaced from the rotational axes 27. The axes of rotation 27 are parallel to the longitudinal axis 15 of the drum 7, so that, during operation, the knives 21 rotate closely along the outside of the drum 7.

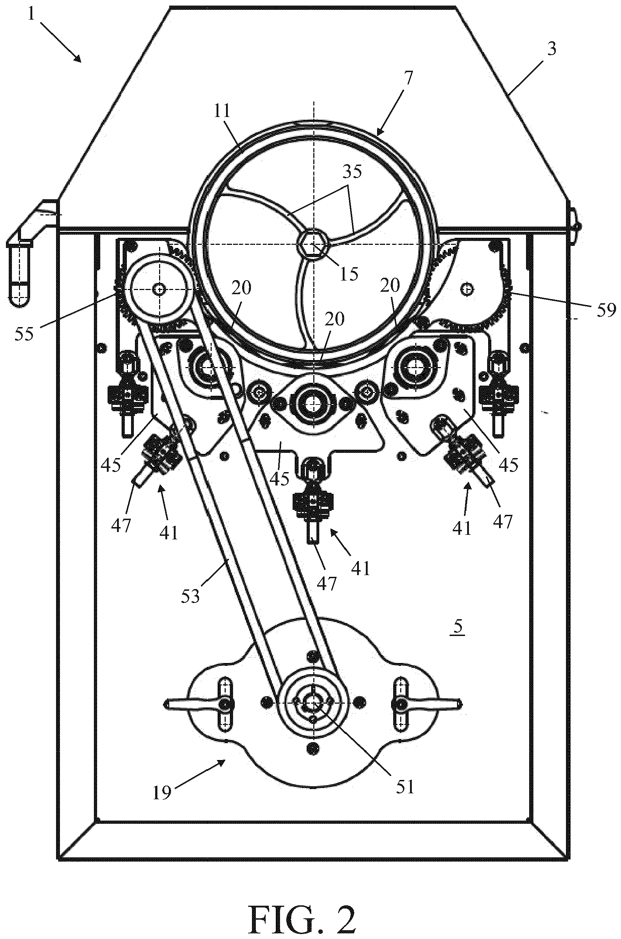

The cutting device 1 furthermore has first rotation means 19 for rotating the drum 7 about the longitudinal axis 15, see in particular figure 2. These first rotation means 19 have an electric motor 51 which drives a gear 55 via a belt 53 which is in engagement with a toothing 57 present in one of the rings 11 65 mounted on the rotational shafts 27 of the reels 20.

The ring 9 of drum 7 rests loosely on rollers (not visible in the figures) and the ring 11 of drum 7 rests loosely on two gear wheels 55 and 59, see figure 2. The drum 7 can thus move upwards out of the cut-off can be taken out by opening a hood on top of the frame. In order to be able to easily remove the drum 7 from the cutting device, the drum is preferably of a sturdy design. The strength of the drum 7 is obtained by tensioning means 29 which hold the wall elements 13 taut between the two rings 9 and 11. The tensioning means 29 have a tensioning element 31 formed by a threaded rod which is connected to the two rings 9 and 11 via connecting structures 33 and 35. connected, see figure 1. These connecting structures are formed by three arms which are attached with one end to the inner side of the rings and attached to a sleeve at the other ends, see also figures 4 and 5. One of the sleeves is attached to a end 31a of the tensioning element 31 and the other sleeve is provided with an internal screw thread in which an externally threaded adjustment element 37 is rotatable, see figure 1. This adjustment element (sleeve) 37 is provided with an opening 39 with internal screw thread in which the other end 31b of the tensioning element 31 is present. By turning the adjusting element 37, the rings 9 and 11 are moved away from each other, whereby the wall elements 13 are put under tension and the drum 7 is given stability.

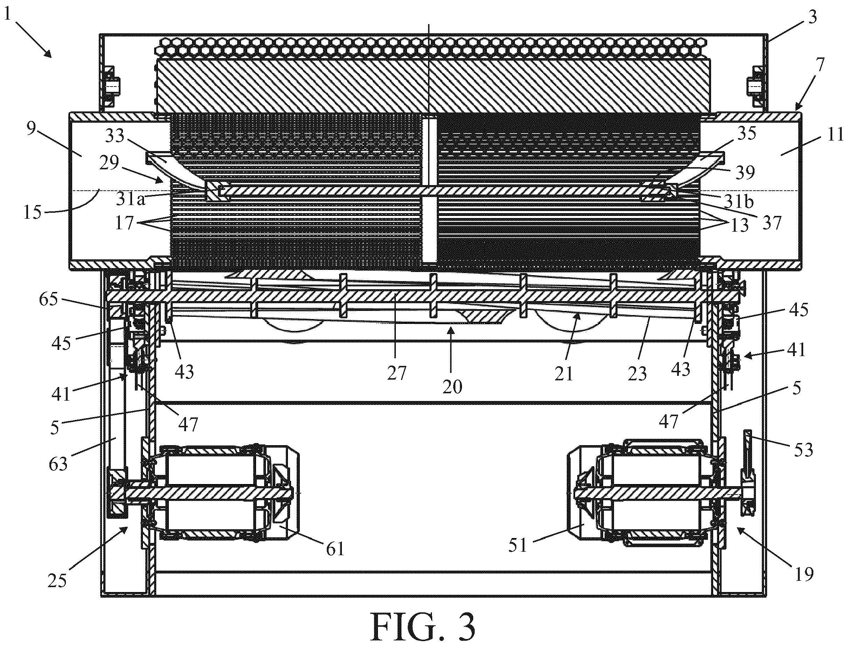

The cutting device 1 furthermore has adjustment means 41 with which the distance between the rotational axes 27 of the knife cages 20 and the longitudinal axis 15 of the drum 7 can be adjusted, see figures 1 and 2. Each knife cage 20 has three knifes 21 which with their ends are mounted on the disks 43 and extend helically/helically between the disks, see figures 3 and 4. The disks 43 are mounted on the rotation shafts 27, which are journalled with their ends in slides 45. The pulleys 65 are mounted on one of the ends of the rotation shafts 27. The slides 45 are movable in a direction radially on the longitudinal axis 15 of the drum 7. The position of the slides 45 and thus the distance from the knives 21 to the wall parts 13 of the drum 7 can be adjusted by adjusting screws 47.

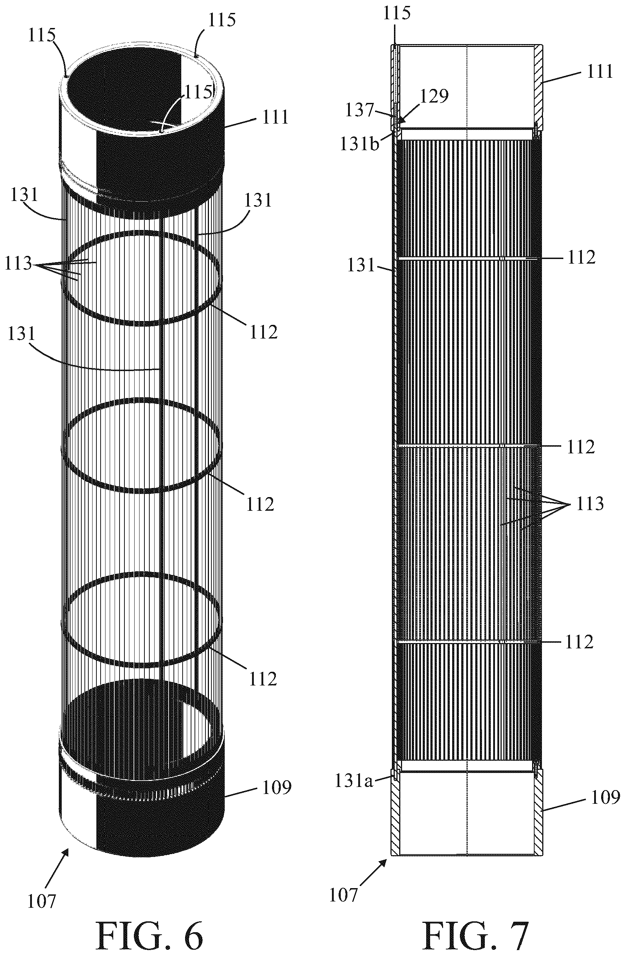

In figures 6 and 7 a drum 107 of a second embodiment of the cutting device according to the invention is shown in perspective and in longitudinal section, respectively. Three tensioning elements 131 are present between the rings 109 and 111, which are formed by rods and diaphragms and are attached with a first end 131a to one of the rings 109 and which with the other, second end 131b projects into a hole 115 present in the other ring 111 and is slidable therein. This hole is provided with internal threads over part of its length in which an externally threaded adjusting element 137 is rotatable. The wall elements 113 again can be designed as wires/cables or as bars and are attached to the rings 109 and 111 at both ends. Between the rings, the wall elements 113 are connected to each other in a number of places by annular discs 112. By turning the adjusting elements 137 further into the holes 115, the rings 109 and 111 are pushed apart, whereby the tension in the wall elements 113 increases.

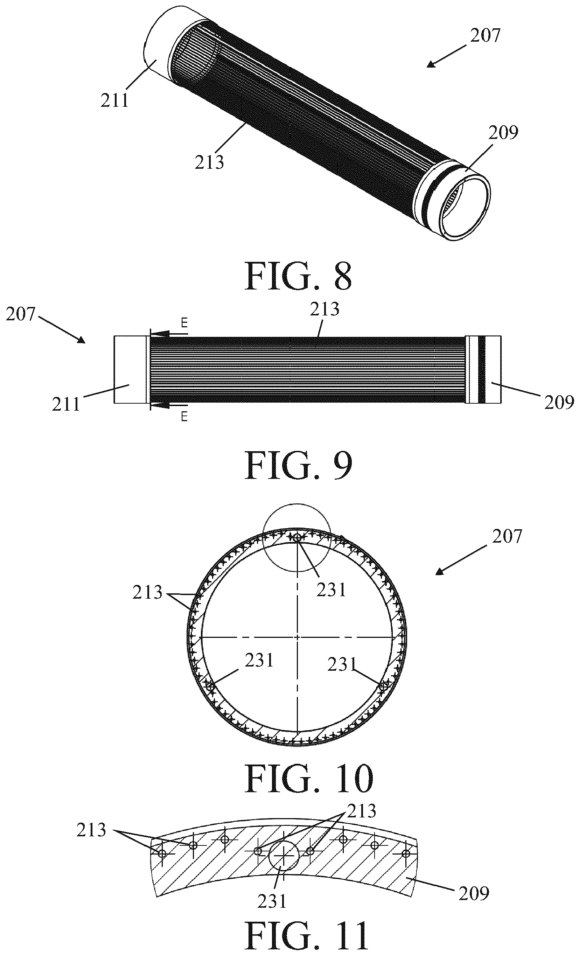

In figures 8, 9 and 12 a drum 207 of a third embodiment of the cutting device according to the invention is shown in perspective side view and longitudinal section, respectively. This drum 207 is also provided with two rings 209 and 211 between which a large number of wall elements 213 extend. This drum 207 is also provided with tensioning means 229 which are formed by three tensioning elements 231 which also extend between the rings 209 and 211.

In the cross-section of the drum 207 shown in figure 10, the position of the wall elements 213 and the tensioning elements 231 is clearly visible. In the enlarged detail of this cross-section shown in figure 11 at the location of one of the tensioning elements 231, it can be seen that the tensioning element 231 with the adjacent wall elements are present at a smaller diameter than the other wall elements 213. As a result, the wall elements can be kept under tension in a better way.

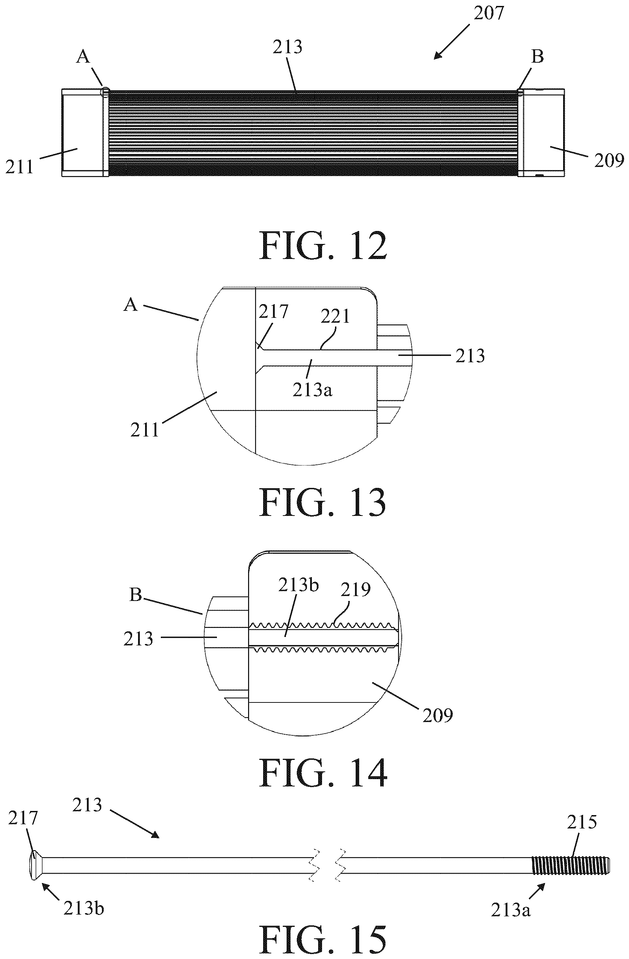

In this embodiment the wall elements 213 are formed by spokes of a wheel of a bicycle, see figure 15, and are provided with screw thread 215 at one end 213a and at the other end 213b with a radially projecting head 217. The spokes are with the threaded ends 213a screwed into internally threaded holes 221 in one of the rings 211, see figure 14, and protrude with the other ends 213b through holes 219 in the other ring 209 with the head 217 hooking behind the bounding edges of these holes 219, see figure 13. These holes 219 are widened at one end, the heads 217 being partly recessed in the widened ends of the holes.

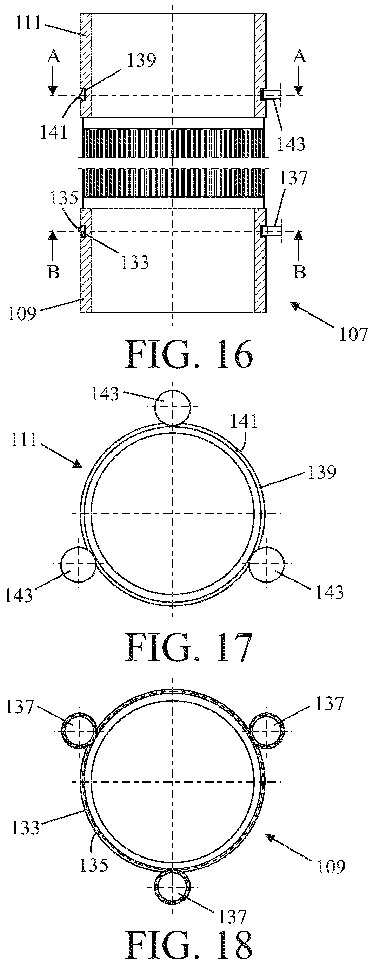

In the cutting device according to the invention, the drum is not mounted on bearings, but the drum is present between rotational bodies (in this embodiment designed as rollers and gear wheels). In figure 16 the drum 107 of the second embodiment of the cutting device is shown in longitudinal section, wherein the cooperation with rollers 143 and gear wheels 137 of the cutting device is clearly visible. At one of the rings 111 of the drum 107, a circumferential groove 139 is provided in the ring on the outside. The space in the groove 139 is bounded in the axial direction of the drum 111 by boundary walls 141 of the ring. For clarification, figure 17 shows a cross-section of the drum at the location of the groove. Distributed over the circumference, three rollers 143 are in the cutting device, which rollers 143 enclose the ring 111 in the radial direction.

The rollers 143 partly present in the groove are enclosed in the axial direction between the boundary walls 141 of the groove 139. If the ring 111 should want to shift in the axial direction, these boundary walls 141 come into contact with the rollers 143, whereby displacement of the ring 111 in axial direction is blocked.

At the other ring 109 of the drum 107 a toothing 133 is arranged in the ring on the outside. This toothing 133 has teeth arranged one behind the other in the circumferential direction of the ring. The spaces between the teeth are bounded in the axial direction of the drum by limiting parts 135 of the ring 109. For clarification, figure 18 shows the drum 107 in cross section at the location of the teeth 133. Distributed over the circumference, three gear wheels 137 are present in the cutting device, at least one of which is driven and the others enclose the ring 109 in the radial direction.

The meshing teeth of the gears 137 are axially confined between the limiting parts 135 of the inter-tooth spaces of the toothing 133 in which the meshing teeth are located. If the ring 109 would like to shift in the axial direction, these limiting parts 135 come into contact with the teeth of the toothing 133. Together with the rollers 143, the gear wheels 137 ensure that the ring 109 is locked against displacement in the axial direction.

Although the invention has been elucidated in the foregoing with reference to the drawings, it should be noted that the invention is by no means limited to the embodiments shown in the drawings. The invention also extends to all embodiments deviating from the embodiments shown in the drawings within the framework defined by the claims.

## Claims

1. A cutting device (1) for cutting leaves from flowers of plants, comprising:
- a drum (7; 107; 207) into which the flowers to be treated are to be inserted, which drum (7; 107; 207) comprises two rings (9, 11; 109, 111; 209, 211) located at a distance from each other, one at each end of the drum (7; 107; 207), as well as a plurality of elongate wall elements (13; 113; 213), each of which is fixed with one end to one of the rings (9; 109; 209) and with the other end to the other ring (11; 111; 211) and extends parallel to the longitudinal axis (15) of the drum (7; 107; 207) between the rings (9, 11; 109, 111; 209, 211), which wall elements (13; 113; 213) are distributed over the circumference of the drum (7; 107; 207) and are spaced apart, wherein during operation the leaves to be cut protrude through the openings (17) between the wall elements,
- first rotation means (19) for rotating the drum (7) about the longitudinal axis (15),
- at least one elongate knife (21) provided with a cutting edge (23), which knife (21) is next to the drum (7), and
- tensioning means (29; 129; 229) for keeping the wall elements (13; 113; 211) taut between the two rings (9, 11; 109, 111; 209, 211), which tensioning means (29; 129; 229) are connected to the two rings (9, 11; 109, 111; 209, 211) and exert an axial force on each of the rings (9, 11; 109, 111; 209, 211), which forces are directed away from each other,
**characterized in that** the tensioning means (29; 129; 229) are fully integrated in the drum (7; 107; 207).

2. Cutting device according to claim 1, **characterized in that** the tensioning means (29; 129; 229) comprise at least one elongate tensioning element (31; 131; 231) extending in the longitudinal direction of the drum (7; 107; 207) and being connected at one end to one of the rings (9; 109; 209) and at the other end to the other ring (11; 111; 211), said tensioning member (31; 131; 231) being configured such that it exerts a force on the two rings (9, 11; 109, 111; 209, 211) that pushes the two rings away from each other or can displace the two rings away from each other.

3. Cutting device according to claim 2, **characterized in that** the tensioning element (31) extends in the center of the drum and near the ends (31a, 31b) is connected to the rings (9, 11) via connecting structures (33, 35), one of the ends (31b) being displaceable relative to the respective connecting structure (35).

4. Cutting device according to claim 2, **characterized in that** the cutting device comprises at least three tensioning elements (131) distributed over the circumference of the rings (109, 111), the tensioning elements (131) being located between the rings (109, 111) and extend between or next to the wall elements (113).

5. Cutting device according to claim 3 or 4, **characterized in that** the tensioning means (29; 129) furthermore comprise at least one adjusting element (37; 137), a first end (31a; 131a) of the tensioning element (31) or of each tensioning element (131) being attached to one of the rings (109) or to one of the connecting structures (33) and the other, second end (31b; 131b) being coupled via the adjusting element (37) or one of the adjusting elements (137) to the other ring (111) or to the other connecting structure (35), wherein the rings (9, 11; 109, 111) can be moved away from or towards each other by means of the adjusting element (37; 137).

6. Cutting device according to claim 5, **characterized in that** the tensioning element (31) at the second end is provided with a screw thread which cooperates with a further screw thread provided in or on the adjusting element (37), which adjusting element (37) is rotatable connected to the other connecting structure (35), wherein the tensioning element (31) and the adjusting element (37) are displaced relative to each other in the longitudinal direction by rotating the adjusting element (37).

7. Cutting device according to one of the preceding claims, **characterized in that** at the outside of at least one of the rings (109) a toothing (133) is provided in the ring, which toothing comprises a number of teeth arranged one behind the other in the circumferential direction of the ring, wherein the space between two successive teeth is bounded in the axial direction of the drum by limiting parts (135) of the ring (109), and that the rotation means comprise at least one gear (137) which is engaged with the teeth (133) in the ring (109), wherein the meshing teeth of the gear are axially confined between the limiting parts (135) of the space between the teeth of the gear in which the meshing teeth are located.

8. Cutting device according to one of the preceding claims, **characterized in that** at the outside of at least one of the rings (111) a circumferential groove (139) is provided in the ring (111), the space in the groove (139) is bounded in the axial direction of the drum (111) by boundary walls (141) of the ring (111), and that the cutting device comprises at least one roller (143) which is partly present in the groove (139) and is axially confined between the boundary walls (141) of the groove (139).

9. Cutting device according to one of the preceding claims, **characterized in that** the wall elements (13; 113) are formed by wires with a diameter between 0.5 and 2 mm.

10. Cutting device according to one of the preceding claims 1-8, **characterized in that** the wall elements (213) are formed by rods with a diameter between 0.5 and 2 mm.

11. Cutting device according to claim 10, **characterized in that** the rods (213) at one end (213a) over part of their length are provided with external screw threads (215) and being in holes (221) in one of the rings (211), which holes (221) are provided with internal screw threads, and that the rods (213) at the other end (213b) are provided with a radially projecting head (217) and pass through holes (219) in the other ring (209), wherein the radially protruding head (217) does not fit into the holes (219) and hooks behind the boundary edges of the holes (219).

12. Cutting device according to any one of the preceding claims, **characterized in that** the cutting device further comprises second rotation means (25) for rotating the knife (21) about an axis (27) of rotation at a distance from the cutting edge (23) and parallel to and distant from the longitudinal axis (15) of the drum (7), wherein during operation the cutting edge (23) of the knife (21) rotates along the outside of the drum (7).

13. Cutting device according to claim 12, **characterized in that** the cutting device comprises adjusting means (41) capable of adjusting the distance between the axis (27) of rotation of the knife (21) and the longitudinal axis (15) of the drum (7).

14. Cutting device according to claim 13, **characterized in that** the knife (21) at each end is attached to a disc (43), wherein the cutting edge (23) being at the periphery of the discs (43), which are journalled in slides (45), and wherein the adjusting means (41) comprising adjusting screws (47) which can move the slides (45) in a direction radial to the drum (7).
